# EUROPÄISCHE PATENTANMELDUNG

(11) **EP 4 007 307 A1**
(43) Veröffentlichungstag der Anmeldung: **01.06.2022**
(21) Anmeldenummer: 21198440.6
(22) Anmeldetag: 23.09.2021
(51) Int. Cl.: H04R 25/00, G06F 21/62

(54) **VERFAHREN ZUR UNTERSTÜTZUNG EINES NUTZERS EINES HÖRGERÄTES, HÖRGERÄT UND COMPUTERPROGRAMMPRODUKT**

(30) Priorität: 27.11.2020 DE 102020214914
(71) Anmelder: Sivantos Pte. Ltd., Singapore 539775 (SG)
(72) Erfinder: BETAGERI, Renuka, 90409 Nürnberg (DE)
(74) Vertreter: FDST Patentanwälte

(57) **Zusammenfassung**

Die Erfindung betrifft ein Verfahren zur Unterstützung eines Nutzers (2) eines Hörgerätes (4), bei dem das Hörgerät (4) in einer ersten Anpassungs-Sitzung, welche insbesondere im Heimatland (HL) des Nutzers (2) abgehalten wird, individuell an den Nutzer (2) angepasst wird, bei dem während der ersten Anpassungs-Sitzung Anpassungs-Daten generiert werden, bei dem die Anpassungs-Daten dem Nutzer (2) oder dem Hörgerät (4) zugeordnet werden und derart abgespeichert werden, dass der Zugriff auf die Anpassungs-Daten durch eine Zugriffsbeschränkung beschränkt ist, bei dem ein Aufenthalt in einem fremden Land (FL) automatisch erkannt wird und bei dem eine Anfrage an den Nutzer (2) ausgegeben wird, ob die Zugriffsbeschränkung geändert werden soll, wenn ein Aufenthalt in einem fremden Land (FL) automatisch erkannt wird.

## Beschreibung

Die Erfindung betrifft ein Verfahren zur Unterstützung eines Nutzers eines Hörgerätes. Weiterhin betrifft die Erfindung ein Hörgerät sowie ein Computerprogrammprodukt.

Als Hörgeräte bezeichnet man typischerweise klassische Hörhilfen, die zur Versorgung von Schwerhörenden dienen. Im weiteren Sinne bezeichnet dieser Begriff jedoch auch Geräte, die zur Unterstützung von normal hörenden Menschen ausgebildet sind. Hörgeräte zur Unterstützung von normal hörenden Menschen werden auch als "Personal Sound Amplification Products" oder "Personal Sound Amplification Devices" (kurz: "PSAD") bezeichnet. Derartige Hörgeräte sind im Gegensatz zu klassische Hörhilfen nicht zur Kompensation von Hörverlusten vorgesehen, sondern werden gezielt zur Unterstützung und Verbesserung des normalen menschlichen Hörvermögens in spezifischen Hörsituationen eingesetzt, z.B. zur Unterstützung bei der Tierbeobachtung, um Tierlaute und sonstige von Tieren erzeugte Geräusche besser wahrnehmen zu können, zur Unterstützung von Jägern auf der Jagd, für Sportreporter, um ein verbessertes Sprechen und/oder Sprachverstehen in komplexer Geräuschkulisse zu ermöglichen, für Musiker, um die Belastung des Gehörs zu reduzieren, etc..

Unabhängig vom vorgesehenen Einsatzzweck weisen Hörgeräte üblicherweise zumindest einen Eingangswandler, eine Signalverarbeitungseinrichtung und einen Ausgangswandler als wesentliche Komponenten auf. Der zumindest eine Eingangswandler ist dabei in der Regel durch einen akusto-elektrischen Wandler ausgebildet, also beispielsweise durch ein Mikrofon, oder durch einen elektromagnetischen Empfänger, beispielsweise eine Induktionsspule. In vielen Fällen sind sogar mehrere Eingangswandler verbaut, also zum Beispiel ein oder mehrere akusto-elektrische Wandler und ein elektromagnetischer Empfänger. Als Ausgangswandler wird meist ein elektro-akustischer Wandler eingesetzt, beispielsweise ein Miniaturlautsprecher (der auch als "Hörer" bezeichnet wird), oder ein elektromechanischer Wandler, zum Beispiel ein Knochenleitungshörer. Die Signalverarbeitungseinrichtung ist in der Regel durch eine auf einer Leiterplatine realisierte elektronische Schaltung realisiert und weist unabhängig davon üblicherweise einen Verstärker auf.

Außerdem sind Hörgeräte häufig mit einer Sende- und/oder Empfangseinheit ausgestattet, die eine drahtlose Kommunikation mit anderen elektronischen Geräten ermöglicht, insbesondere mit anderen Hörgeräten (z.B. zur Bildung eines binauralen Hörgerätesystems oder Hörhilfesystems), mit Fernbedienungen, mit Programmiergeräten, mit Mobiltelefonen oder Smartphones. Die drahtlose Kommunikation erfolgt hierbei typischerweise mittels elektromagnetischer Wellen im Funkfrequenzbereich von 500 kHz bis 5 GHz, also zum Beispiel im Frequenzbereich von 1 MHz bis 50 MHz oder beispielsweise unter Nutzung der Bluetooth-Technologie bei etwa 2.4 GHz.

Wenn ein Nutzer ein solches Hörgerät für sich erwirbt, so wird das Hörgerät häufig in einer sogenannten Anpassungs-Sitzung, auch Fitting-Session genannt, von einem Fachmann, typischerweise einem Hörgeräteakustiker, an die individuellen Bedürfnisse des Nutzers angepasst und/oder gemäß den Wünschen des Nutzers konfiguriert. Diese erste Anpassungs-Sitzung wird dabei üblicherweise im Heimatland des Nutzers abgehalten, unter anderem da in der Regel ein Informationsaustausch zwischen dem Nutzer und dem Fachmann für die individuelle Anpassung bzw. die Konfiguration des Hörgerätes notwendig ist und ein entsprechender Informationsaustausch für die meisten Menschen einfacher ist, wenn hierfür die Muttersprache genutzt werden kann.

Außerdem werden dann im Laufe der Zeit üblicherweise weitere Anpassungs-Sitzungen notwendig, in denen beispielsweise Wartungsarbeiten durchgeführt werden. Eine solche weitere Anpassungs-Sitzung kann dabei zum Beispiel auch notwendig werden, wenn sich der Nutzer gerade außerhalb seines Heimatlandes aufhält. Dies stellt in den Fällen ein gewisses Problem dar, in denen der Nutzer die Sprache des Landes, in dem er sich gerade aufhält, nicht oder nicht ausreichend beherrscht, um mit einem Fachmann vor Ort Informationen auszutauschen, die für die weitere Anpassungs-Sitzung von Relevanz sind.

Ausgehend hiervon liegt der Erfindung die Aufgabe zugrunde, ein Verfahren zur Unterstützung eines Nutzers eines Hörgerätes anzugeben, ein vorteilhaft ausgebildetes Hörgerät anzugeben sowie ein vorteilhaftes Computerprogrammprodukt anzugeben.

Diese Aufgabe wird erfindungsgemäß gelöst durch ein Verfahren mit den Merkmalen des Anspruchs 1, durch ein Hörgerät mit den Merkmalen des Anspruchs 14 sowie durch ein Computerprogrammprodukt mit den Merkmalen des Anspruchs 15. Bevorzugte Weiterbildungen sind in den rückbezogenen Ansprüchen enthalten. Die im Hinblick auf das Verfahren angeführten Vorteile und bevorzugten Ausgestaltungen sind sinngemäß auch auf das Hörgerät und/oder das Computerprogrammprodukt übertragbar und umgekehrt.

Das erfindungsgemäße Verfahren dient der Unterstützung eines Nutzers eines Hörgerätes. Dabei steht der Begriff Hörgerät stellvertretend sowohl für ein einzelnes Hörgerät als auch für ein Hörgeräte-System mit zwei Hörgeräten, nämlich mit einem Hörgerät für ein linkes Ohr und mit einem Hörgerät für ein rechtes Ohr, also zum Beispiel für ein sogenanntes binaurales Hörgeräte-System.

Unabhängig davon ist das Hörgerät typischerweise entsprechend einem eingangs beschriebenen Hörgerät ausgebildet und insbesondere als klassische Hörhilfe für einen schwerhörenden Nutzer.

Im Zuge des Verfahrens wird das Hörgerät in einer ersten Anpassungs-Sitzung, welche bevorzugt im Heimatland des Nutzers abgehalten wird, individuell an den Nutzer angepasst und/oder gemäß den Wünschen des Nutzers konfiguriert. Die entsprechende Anpassung bzw. Konfiguration wird dabei typischerweise von einem Dienstleister vorgenommen, also insbesondere einem Fachmann, der ausgebildet ist, Hörgeräte an die individuellen Bedürfnisse eines Nutzers anzupassen, also zum Beispiel an den individuellen Hörverlust eines Nutzers anzupassen, und/oder Hörgeräte zu warten oder zu reparieren. Ein solcher Fachmann gehört üblicherweise zu einer Berufsgruppe, zu der zum Beispiel Hörakustiker, Hörgeräteakustiker oder Hörsystemakustiker zählen, wobei die Bezeichnungen in einigen Fällen eine Spezialisierung widerspiegeln.

Weiter werden im Zuge des Verfahrens während der ersten Anpassungs-Sitzung und in einigen Fällen zudem während weiterer Anpassungs-Sitzungen entweder beim Dienstleister der ersten Anpassungs-Sitzung oder zumindest bei einem Dienstleister im Heimatland Anpassung-Daten generiert. Hierbei handelt es sich typischerweise um Daten, anhand derer die individuelle Anpassung des Hörgerätes an den Nutzer nachvollziehbar ist, mit deren Hilfe also insbesondere auch die individuelle Anpassung des Hörgerätes reproduziert werden kann. Alternativ oder ergänzend hierzu enthalten die Anpassung-Daten Informationen zur Sprache, die der Nutzer bevorzugt, Informationen zur bisherigen Nutzungshistorie des Hörgeräts, Informationen zu bisher aufgetretenen Problemen, Informationen zu Lösungen für bisher aufgetretene Probleme, etc.

Jene Anpassungs-Daten werden dem Nutzer und/oder dem Hörgerät zugeordnet und, zum Beispiel am Ende der ersten Anpassungs-Sitzung oder einer weiteren zuvor genannten Anpassungs-Sitzung, abgespeichert und zwar derart, dass der Zugriff auf die Anpassungs-Daten durch eine Zugriffsbeschränkung beschränkt ist. Die Art der Zugriffsbeschränkung variiert dabei je nach Anwendungsfall. Typisch ist jedoch eine Form der Zugriffsbeschränkung, bei der Zugriffsdaten, beispielsweise ein Zugangscode oder Passwort, benötigt werden, um auf die Anpassung-Daten zugreifen zu können.

Die Anpassung-Daten des Nutzers werden dann zum Beispiel in einer zugriffsbeschränkten Datenbank gespeichert, auf die mittels der Zugriffsdaten zugegriffen werden kann und in der für eine Vielzahl von Nutzern und/oder Hörgeräten Anpassungs-Daten hinterlegt sind. Alternativ ist die Zugriffsbeschränkung dergestalt, dass für jeden Nutzer und/oder für jedes Hörgerät ein Datensatz abgespeichert wird, der die Anpassung-Daten enthält, und dass für jeden Datensatz eigene dem Datensatz eindeutig zugeordnete Zugriffsdaten benötigt werden. Somit erlauben dann entsprechende Zugriffsdaten lediglich den Zugriff auf die Anpassung-Daten, die einem ganz bestimmten Nutzer und/oder einem ganz bestimmten Hörgerät zugeordnet sind.

Weiterhin wird im Zuge des Verfahrens einen Aufenthalt, also typischerweise ein Aufenthalt des Nutzers, in einem fremden Land automatisch erkannt. Der Begriff fremdes Land steht dabei im Sinne dieser Anmeldung zunächst für einen Staat, in dem der Nutzer nicht Staatsbürger ist und/oder in dem der Nutzer nicht wohnhaft ist. Im erweiterten Sinne steht der Begriff fremdes Land jedoch auch für eine Region, in der die Mehrheit der Bevölkerung eine Sprache spricht, die nicht der Sprache der Mehrheit der Bevölkerung in der Region entspricht, in der der Nutzer wohnhaft ist. Dabei gilt es zu bedenken, dass in einigen Staaten, wie beispielsweise Indien, in unterschiedlichen Regionen unterschiedliche Sprachen gesprochen werden, obwohl alle Regionen zum selben Staat gehören.

Wird nun der Aufenthalt in dem fremden Land automatisch erkannt, so wird im Zuge des Verfahrens eine Anfrage an den Nutzer ausgegeben, ob die Zugriffsbeschränkung geändert werden soll. Dabei wird die Anfrage beispielsweise über das Hörgerät selbst ausgegeben, indem zum Beispiel eine geeignete Sprachmitteilung ausgegeben wird. Je nach Anwendungsfall erfolgt zudem auch die automatische Erkennung des Aufenthalts in dem fremden Land durch das Hörgerät.

Bevorzugt wird zur Ausführung des Verfahrens jedoch eine mobile Datenverarbeitungseinheit genutzt, welche beispielsweise als Smartphone, als Tablett oder als Laptop ausgebildet ist. In diesem Fall wird dann die Anfrage weiter bevorzugt über ein Display ausgegeben, wobei je nach Anwendungsfall zusätzlich eine akustische Ausgabe der Anfrage vorgesehen ist.

Nach Ausgabe der Anfrage besteht für den Nutzer zweckdienlicherweise die Möglichkeit, einer Änderung der Zugriffsbeschränkung zuzustimmen oder diese abzulehnen. Die Wahl trifft der Nutzer dabei üblicherweise durch eine Eingabe, die beispielsweise als Spracheingabe über ein Mikrofon oder als Eingabe über eine Tastatur oder einen Touchscreen erfolgt. Ist keine mobile Datenverarbeitungseinheit vorgesehen, so erfolgt die Eingabe typischerweise als Spracheingabe über ein Mikrofon, also insbesondere ein Mikrofon des Hörgerätes.

Entscheidet sich der Nutzer gegen eine Anpassung oder Änderung der Zugriffsbeschränkung, so erfolgt bevorzugt kein weiterer Verfahrensschritt. Entscheidet sich der Nutzer dagegen für eine Änderung der Zugriffsbeschränkung und wird von ihm eine entsprechende Eingabe getätigt, so wird typischerweise nachfolgend die Zugriffsbeschränkung geändert, vorzugsweise automatisch. Dazu wird zum Beispiel vom Hörgerät oder von der mobilen Datenverarbeitungseinheit ein Änderungsauftrag dorthin übermittelt, wo die Anpassungs-Daten des Nutzers gespeichert sind. Bei jenem Änderungsauftrag handelt es sich je nach Anwendungsfall zum Beispiel um eine Nachricht an den Dienstleiter der ersten Anpassungs-Sitzung per SMS oder per E-Mail oder um eine Art Befehl oder Befehlscode, durch den eine automatische Änderung initiiert wird. Durch eine entsprechende Änderung der Zugriffsbeschränkung wird dann typischerweise eine Art Roaming Service aktiviert oder freigegeben, durch den die Anpassungs-Daten einem erweiterten Personenkreis zugänglich gemacht werden, insbesondere für eine Nutzung während einer weiteren Anpassungs-Sitzung.

Wie bereits zuvor dargelegt, erfolgt im Zuge des Verfahrens eine automatische Erkennung des Aufenthalts in dem fremden Land. Dabei wird der Aufenthalt in dem fremden Land gemäß einer Ausführungsvariante mithilfe von GPS-Daten (GPS: Global Positioning System) oder vergleichbaren Daten automatisch erkannt und in diesem Fall weist dann das Hörgerät und/oder die mobile Datenverarbeitungseinheit zweckdienlicherweise einen Empfänger für GPS-Daten bzw. für die vergleichbaren Daten auf.

Alternativ oder ergänzend hierzu wird der Aufenthalt in dem fremden Land mithilfe eines Kommunikations-Netzwerks erkannt, also beispielsweise mithilfe eines Mobilfunknetzes und/oder mithilfe eines WLAN, wobei dem WLAN zum Beispiel die IEEE 802.11 Norm zugrunde liegt und gegebenenfalls eine Wi-Fi-Zertifizierung zugewiesen ist. D. h., dass beispielsweise der Aufenthalt in dem fremden Land automatisch erkannt wird, wenn sich die zuvor beschriebene mobile Datenverarbeitungseinheit, welche beispielsweise als Smartphone ausgebildet ist, mit einem Mobilfunknetz eines fremden Landes verbindet, oder zumindest, wenn die entsprechende mobile Datenverarbeitungseinheit ein solches Mobilfunknetz erkennt.

Zweckdienlich ist es weiterhin, wenn der Aufenthalt in dem fremden Land mit Hilfe einer sogenannten SIM-Karte (SIM: Subscriber Identity Module) automatisch erkannt wird, wenn also zum Beispiel das zuvor beschriebene Smartphone eine SIM-Karte eines Mobilfunknetzes des fremden Landes erkennt oder wenn eine solche SIM-Karte aktiviert wird. Hierbei gilt es zu bedenken, dass es nicht unüblich ist, für einen Aufenthalt im Ausland, beispielsweise im Rahmen einer Geschäftsreise oder während eines Urlaubs, eine SIM-Karte zu erwerben, um damit dann ein Mobilfunknetz in dem fremden Land nutzen zu können. Der Aufenthalt in dem fremden Land wird dann zum Beispiel automatisch erkannt, wenn eine entsprechende SIM-Karte beispielsweise in das Smartphone eingelegt wird und das Smartphone daraufhin wieder angeschalten wird.

Wie bereits zuvor dargelegt, wird die Anfrage an den Nutzer, ob die Zugriffsbeschränkung geändert werden soll, gemäß einer bevorzugten Ausführungsvariante über ein Display ausgegeben, insbesondere dann, wenn die Anfrage durch die zuvor genannte mobile Datenverarbeitungseinheit ausgegeben wird. Je nach Anwendungsfall wird außerdem die Anfrage derart ausgegeben, dass dem Nutzer eine Anzahl von Möglichkeiten zur Verfügung steht, auf die Anfrage zu reagieren. Im einfachsten Fall wird dem Nutzer die Möglichkeit gegeben, die Anfrage entweder abzulehnen oder der Anfrage zuzustimmen. Alternativ werden mit der Anfrage mehrere, also mehr als zwei, Möglichkeiten vorgegeben, auf die Anfrage zu reagieren. So werden gemäß einer Ausführungsvariante dem Nutzer zwei verschiedene Varianten zur Änderung der Zugriffsbeschränkung zur Auswahl angeboten und zwar insbesondere zusätzlich zur Möglichkeit, die Anfrage abzulehnen und somit eine Änderung der Zugriffsbeschränkung abzulehnen.

Von Vorteil ist weiterhin eine Verfahrensvariante, bei der die Anfrage an den Nutzer, ob die Zugriffsbeschränkung geändert werden soll, nur dann ausgegeben wird, wenn eine zweite Anpassungs-Sitzung als anstehend erkannt wird. D. h., dass in diesem Fall zwei Bedingungen erfüllt sein müssen, bevor eine entsprechende Anfrage ausgegeben wird. Eine Bedingung ist dann, dass eine zweite Anpassungs-Sitzung als anstehend erkannt wird, und die zweite Bedingung ist dann, dass der Aufenthalt in dem fremden Land erkannt wird.

Eine zweite Anpassungs-Sitzung wird dabei zum Beispiel als anstehend erkannt, wenn in der mobilen Datenverarbeitungseinheit ein Termin für eine Anpassungs-Sitzung hinterlegt oder abgespeichert ist und ein vorgegebener Zeitpunkt erreicht wird, an den eine Erinnerung an den Termin vorgesehen ist.

Alternativ oder ergänzend hierzu wird eine zweite Anpassungs-Sitzung als anstehend erkannt, wenn der Nutzer, vorzugsweise mithilfe der mobilen Datenverarbeitungseinheit, eine Suche startet nach Dienstleistern, insbesondere Dienstleistern der zuvor beschriebenen Art mit einem Fachmann aus der zuvor beschriebenen Berufsgruppe, welcher Anpassungen und/oder Wartungen und/oder Reparaturen bei Hörgeräten als Dienstleistung anbietet.

Wiederum alternativ oder ergänzend wird eine zweite Anpassungs-Sitzung als anstehend erkannt, wenn eine Fehlermeldung im Hörgerät vorliegt und/oder wenn eine Fehlermeldung vom Hörgerät an die mobile Datenverarbeitungseinheit übermittelt wird.

Weiter wird, wie bereits zuvor ausgeführt, im Falle vieler Verfahrensvarianten die zuvor beschriebene mobile Datenverarbeitungseinheit genutzt, um mit deren Hilfe das erfindungsgemäße Verfahren auszuführen. In diesen Fällen erfolgt die automatische Erkennung des Aufenthalts in dem fremden Land bevorzugt durch die mobile Datenverarbeitungseinheit und weiter bevorzugt wird die Anfrage an den Nutzer, ob die Zugriffsbeschränkung geändert werden soll, über ein Display der mobilen Datenverarbeitungseinheit ausgegeben. Zudem ist es in diesen Fällen üblich, dass das Hörgerät und die mobile Datenverarbeitungseinheit im Zuge des Verfahrens zumindest zeitweise gekoppelt werden, sodass eine Datenübermittlung vom Hörgerät zur mobilen Datenverarbeitungseinheit und/oder von der mobilen Datenverarbeitungseinheit zum Hörgerät ermöglicht ist. Mithilfe einer solchen Koppelung oder während einer solchen Kopplung erfolgt dann zum Beispiel die zuvor beschriebene Übermittlung einer Fehlermeldung vom Hörgerät an die mobile Datenverarbeitungseinheit oder ein Auslesen eines Fehlerspeichers im Hörgerät durch die mobile Datenverarbeitungseinheit.

Von Vorteil ist es weiterhin, wenn im Zuge einer solchen Koppelung zwischen Hörgerät und mobiler Datenverarbeitungseinheit Identifikation-Daten übermittelt werden, die das Hörgerät identifizieren. Stimmt dann der Nutzer im Zuge des Verfahrens einer Änderung der Zugriffsbeschränkung zu, so werden typischerweise diese Identifikation-Daten genutzt, um eine Änderung der Zugriffsbeschränkung durchzuführen, beispielsweise indem ein Auftrag für eine Änderung der Zugriffsdaten an den Ort übermittelt wird, an dem die Anpassungs-Daten gespeichert sind, wobei in diesem Fall der Auftrag bevorzugt die Identifikationsdaten enthält.

Je nach Anwendungsfall ist es außerdem günstig, wenn im Falle einer Zustimmung des Nutzers zur Änderung der Zugriffsbeschränkung die Zugriffsbeschränkung geändert wird, indem Zugriffsdaten generiert werden und beispielsweise an eine dritte Partei übermittelt werden. D. h., dass zum Beispiel ein Zugangscode oder Passwort generiert wird.

Jener Zugangscode wird dann beispielsweise am Display der mobilen Datenverarbeitungseinheit angezeigt und kann daraufhin einem zuvor genannten Dienstleister vorgezeigt werden. Alternativ wird ein entsprechendes Passwort generiert und zum Beispiel per SMS, E-Mail oder sonstiger Nachricht elektronisch an einen ausgewählten Dienstleister oder eine Anzahl ausgewählter Dienstleister übermittelt. Unabhängig von der Art der Übermittlung der Zugriffsdaten an die dritte Partei ist für die Zugriffsdaten typischerweise eine begrenzte Gültigkeitsdauer vorgegeben. D.h. dass die Zugriffsdaten nur für einen vorgegebenen begrenzten Zeitraum, der beispielsweise vom Nutzer festgelegt wird, genutzt werden können, um die Anpassungs-Daten abzufragen. Nach Ablauf der Gültigkeitsdauer sind dann die Anpassungs-Daten mithilfe dieser Zugriffsdaten nicht mehr abfragbar.

Bei der zuvor genannten dritten Partei handelt es sich je nach Anwendungsfall um eine einzelne Person, einen einzelnen Dienstleister oder eine Gruppe von Dienstleistern. Einer Verfahrensvariante entsprechend handelt es sich bei der dritten Partei um alle Dienstleister der zuvor beschriebenen Art, die in dem fremden Land tätig sind und dementsprechend ihre Dienstleistungen in dem fremden Land anbieten. Alternativ handelt es sich um alle Dienstleister der zuvor beschriebenen Art in dem fremden Land sowie alle Dienstleister der zuvor beschriebenen Art in den Ländern, die unmittelbar an das fremde Land angrenzen. Wiederum alternativ handelt es sich um alle Dienstleister der zuvor beschriebenen Art weltweit.

Bei dem Hörgerät handelt es sich typischerweise um ein spezielles Hörgeräte-Modell oder einen speziellen Hörgeräte-Typ eines speziellen Herstellers. Daher ist es zweckdienlich, wenn es sich bei der dritten Partei lediglich um diejenigen Dienstleister der zuvor beschriebenen Art in dem fremden Land handelt, die Dienstleistungen zu Hörgeräten des speziellen Hörgeräte-Herstellers anbieten und/oder die Dienstleistungen zum entsprechenden speziellen Hörgeräte-Modell bzw. Hörgeräte-Typ des speziellen Hörgeräte-Herstellers anbieten. Die entsprechenden Dienstleister sind dann quasi auf Hörgeräte des entsprechenden Herstellers spezialisiert oder sogar auf Hörgeräte des speziellen Hörgeräte-Modells bzw. des speziellen Hörgeräte-Typs. Spezialisiert heißt dabei im Sinne dieser Anmeldung, dass die entsprechenden Dienstleister spezifische Fachkenntnisse und/oder spezifisches Equipment für Hörgeräte des entsprechenden Herstellers und/oder des entsprechenden Hörgeräte-Modells bzw. des speziellen Hörgeräte-Typs verfügen.

Von Vorteil ist es außerdem, wenn im Zuge des Verfahrens eine Rückkehr in das Heimatland des Nutzers automatisch erkannt wird und wenn eine Anfrage an den Nutzer ausgegeben wird, ob die Zugriffsbeschränkung zurückgesetzt oder erneut geändert werden soll, wenn die Rückkehr in das Heimatland automatisch erkannt wird. Stimmt der Nutzer dann einer Zurücksetzung bzw. erneuten Änderung der Zugriffsbeschränkungen zu, so wird die Zugriffsbeschränkung erneut geändert bzw. wieder zurückgesetzt, beispielsweise indem den zuvor ausgegebenen Zugriffsdaten die Gültigkeit entzogen wird.

Ein erfindungsgemäßes Hörgerät ist eingerichtet zur Ausführung zumindest eines Verfahrensschrittes des zuvor beschriebenen Verfahrens in zumindest einem Betriebsmodus. Dazu weist das Hörgerät bevorzugt eine eingangs genannte Sende- und/oder Empfangseinheit auf zum Austausch von Daten mit einer zuvor genannten mobilen Datenverarbeitungseinheit. Der Austausch von Daten erfolgt dabei dann weiter bevorzugt mit Hilfe eines erfindungsgemäßen Computerprogrammprodukts.

Ein erfindungsgemäßes Computerprogrammprodukt wiederum enthält ein auf der zuvor genannten mobilen Datenverarbeitungseinheit ausführbares Programm, welches nach einem Start zumindest einen Verfahrensschritt des zuvor beschriebenen Verfahrens automatisch ausführt. Ein entsprechendes Programm lässt sich auch nachträglich mittels eines erfindungsgemäßen Computerprogrammprodukts installieren oder hinterlegen. Bei jenem Computerprogrammprodukt handelt es sich typischerweise um eine Datei oder einen Datenträger mit einer Datei, wobei die Datei das ausführbare Programm enthält, also insbesondere einen geeigneten Programmcode.

Ausführungsbeispiele der Erfindung werden nachfolgend anhand einer schematischen Zeichnung näher erläutert. Darin zeigen:
- FIG 1: in einer Art Blockschaltbilddarstellung einen Nutzer mit einem Hörgerät bei einer ersten Anpassungs-Sitzung bei einem ersten Dienstleister im Heimatland des Nutzers sowie
- FIG 2: in der Blockschaltbilddarstellung den Nutzer mit dem Hörgerät bei einer zweiten Anpassungs-Sitzung bei einem zweiten Dienstleister in einem fremden Land.

Einander entsprechende Teile sind in allen Figuren jeweils mit den gleichen Bezugszeichen versehen.

Ein nachfolgend exemplarisch beschriebenes Verfahren dient der Unterstützung eines Nutzers 2 eines Hörgerätes 4. Dabei steht der Begriff Hörgerät 4 nachfolgend stellvertretend für ein Hörgeräte-System mit zwei Hörgeräten 4a,4b, nämlich mit einem Hörgerät 4a für das linke Ohr des Nutzers 2 und mit einem Hörgerät 4b für das rechte Ohr des Nutzers 2.

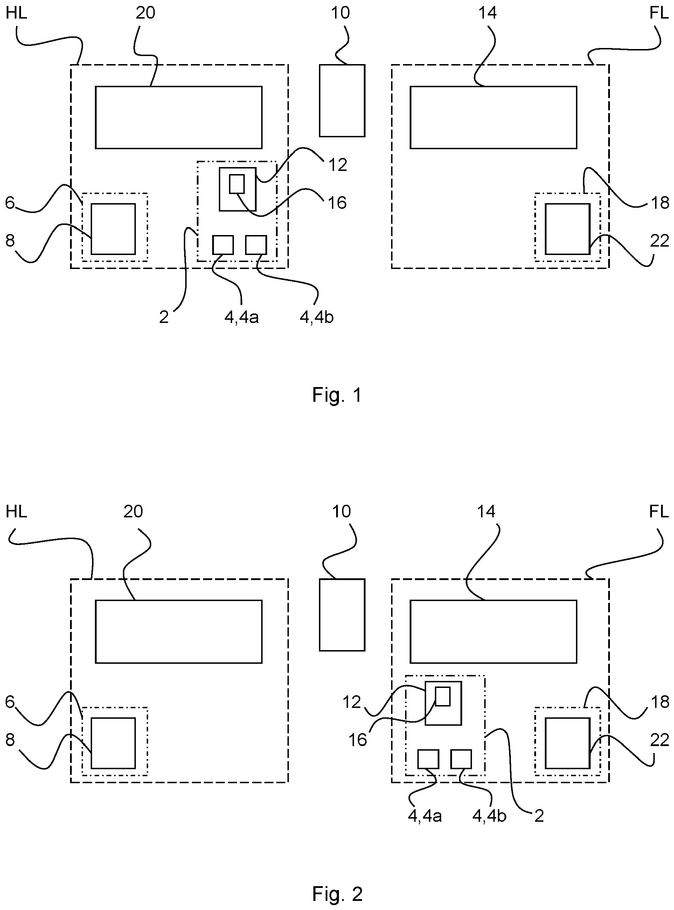

Im Zuge des Verfahrens wird nun das Hörgerät 4 in einer ersten Anpassungs-Sitzung individuell an den Nutzer 4 angepasst. Diese Situation ist in Fig. 1 angedeutet. Insbesondere wenn das Hörgerät 4 hierbei als klassische Hörhilfe ausgebildet ist, erfolgt dabei typischerweise eine Anpassung an einen individuellen Hörverlust des Nutzers 2, wobei zum Beispiel ein sogenanntes Audiogramm der individuellen Anpassung des Hörgerätes 4 an den Nutzer 2 zugrunde gelegt wird.

Davon unabhängig findet die erste Anpassungs-Sitzung exemplarisch bei einen ersten Dienstleister 6 statt, der über Fachwissen zu Hörgeräten verfügt, also beispielsweise in einem Geschäft eines Hörgeräteakustikers. Außerdem wird die erste Anpassungs-Sitzung im Ausführungsbeispiel im Heimatland HL des Nutzers 2 abgehalten, also in dem Land oder Staat, in dem der Nutzer 2 wohnhaft ist und/oder dessen Staatsbürgerschaft der Nutzer 2 innehat.

Weiter werden während der ersten Anpassungs-Sitzung und somit im Zuge des Verfahrens Anpassungs-Daten generiert, durch welche die individuelle Anpassung des Hörgerätes 4 an den Nutzer 2 nachvollzogen werden kann. Teil dieser Anpassungs-Daten sind dabei zum Beispiel Parameterwerte, die für das Hörgerät 4 vorgegeben werden und in deren Abhängigkeit zum Beispiel Eingangssignale durch das Hörgerät 4 verstärkt werden.

Jene Anpassungs-Daten werden dann im Zuge des Verfahrens abgespeichert und war typischerweise derart, dass die Anpassungs-Daten dem Nutzer 2 und/oder dem Hörgerät 4 zugeordnet sind. Zudem werden die Anpassungs-Daten bevorzugt derart abgespeichert, dass der Zugriff auf die Anpassungs-Daten durch eine Zugriffsbeschränkung beschränkt ist.

Die entsprechende Zugriffsbeschränkung ist dabei je nach Anwendungsfall zum Beispiel dergestalt, dass die Anpassungs-Daten auf einem lokalen Rechner 8 oder lokalen Server beim ersten Dienstleister 6 abgespeichert sind, und dass die Anpassungs-Daten lediglich vor Ort beim ersten Dienstleister 6 abgerufen werden können. Alternativ ist die Zugriffsbeschränkung dergestalt, dass die Anpassungs-Daten auf einem nicht beim ersten Dienstleister 6 verorteten Server und insbesondere in einer sogenannten Cloud-Architektur 10 abgespeichert sind und zwar in einem passwortgeschützten Datensatz, in einer passwortgeschützten Ebene der Cloud-Architektur oder in einer passwortgeschützten Datenbank.

Weiter wird im Zuge des Verfahrens ein Aufenthalt in einem fremden Land FL automatisch erkannt und es wird eine Anfrage an den Nutzer 2 ausgegeben, ob die Zugriffsbeschränkung geändert werden soll, wenn der Aufenthalt in dem fremden Land FL automatisch erkannt wird. Je nach Ausführungsvariante wird hierbei der Aufenthalt in dem fremden Land FL durch das Hörgerät 4 oder eine mobile Datenverarbeitungseinheit automatisch erkannt. Hierbei ist die mobile Datenverarbeitungseinheit beispielsweise als Smartphone 12, als Tablett oder als Laptop ausgebildet.

Unabhängig davon, ob der Aufenthalt in dem fremden Land FL vom Hörgerät 4 oder der zuvor genannten mobilen Datenverarbeitungseinheit automatisch erkannt wird, erfolgt die automatische Erkennung gemäß einer Ausführungsvariante mithilfe von GPS-Daten und in diesem Fall weist das Hörgerät 4 bzw. die mobile Datenverarbeitungseinheit typischerweise einen GPS-Empfänger auf. D.h., dass das Hörgerät bzw. die mobile Datenverarbeitungseinheit in diesem Fall dann ausgebildet ist, GPS-Daten zu empfangen und insbesondere auch zu verarbeiten und/oder auszuwerten.

Alternativ oder ergänzend hierzu wird der Aufenthalt in dem fremden Land FL mithilfe eines Kommunikations-Netzwerks 14 im fremden Land FL automatisch erkannt. Ein entsprechendes Kommunikations-Netzwerk 14 dabei zum Beispiel als Mobilfunknetz ausgebildet oder als sogenanntes WLAN. Der Aufenthalt in dem fremden Land FL wird dabei dann typischerweise automatisch erkannt, wenn ein Signal des Kommunikations-Netzwerks 14 empfangen wird oder wenn eine Verbindung zum Kommunikations-Netzwerk 14 aufgebaut wird und wenn das Kommunikations-Netzwerk 14 als Kommunikations-Netzwerk 14 des fremden Landes FL erkannt wird.

Einer weiteren Ausführungsvariante entsprechend wird der Aufenthalt in dem fremden Land FL mithilfe einer sogenannten SIM-Karte automatisch erkannt. Dies gilt insbesondere, wenn die automatische Erkennung durch die zuvor genannte mobile Datenverarbeitungseinheit erfolgt.

Wird nun im Zuge des Verfahrens der Aufenthalt in dem fremden Land FL automatisch erkannt, so wird infolgedessen, also quasi als Reaktion darauf, die Anfrage, ob die Zugriffsbeschränkung geändert werden soll, an den Nutzer 2 ausgegeben und zwar entweder durch das Hörgerät 4 oder durch die mobile Datenverarbeitungseinheit. Wird die Anfrage über die mobile Datenverarbeitungseinheit oder durch die mobile Datenverarbeitungseinheit ausgegeben, so wird die Anfrage bevorzugt über eine Anzeigeeinheit oder ein Display 16 der mobilen Datenverarbeitungseinheit ausgegeben und zwar insbesondere als eine Art Textnachricht.

Vor allem wenn die zuvor genannte Datenverarbeitungseinheit zur Ausführung des Verfahrens genutzt wird, ist eine Ausführungsvariante typisch, bei der das Verfahren mithilfe eines Computerprogrammprodukts ausgeführt wird, welches üblicherweise eine sogenannte App umfasst, also ein auf der mobilen Datenverarbeitungseinheit ausführbares Programm. Die App wird dabei typischerweise im Hintergrund ausgeführt, solange die mobile Datenverarbeitungseinheit im Betrieb ist.

Wird dann der Aufenthalt in dem fremden Land FL automatisch erkannt, so wird zum Beispiel im Display 16 ein Fenster mit einer Textnachricht geöffnet, wobei die Textnachricht die Anfrage, ob die Zugriffsbeschränkung geändert werden soll, enthält. Generiert wird die Anfrage hierbei üblicherweise durch die zuvor genannte App. Alternativ wird die Anfrage an die zuvor genannte Datenverarbeitungseinheit übermittelt, beispielsweise per SMS oder per E-Mail.

Zudem werden dann bevorzugt in dem Fenster dem Nutzer 2 eine Anzahl Auswahlmöglichkeiten zur Verfügung gestellt, aus denen er durch eine Eingabe, beispielsweise über das Display 16, sofern dieses als Touchscreen ausgebildet ist, auswählen kann. Im einfachsten Fall werden dabei zwei Auswahlmöglichkeiten zur Verfügung gestellt, nämlich die Zustimmung zur Änderung der Zugriffsbeschränkung oder eine Ablehnung der Änderung. Alternativ wird dem Nutzer 2 die Möglichkeit gegeben, entweder eine Änderung abzulehnen oder aus einer Anzahl verschiedener Änderungen der Zugriffsbeschränkung auszuwählen.

Mit einer Änderung der Zugriffsbeschränkung wird dann der Personenkreis erhöht, der Zugriff auf die Anpassungs-Daten hat. Über seine Eingabe entscheidet der Nutzer 2 dabei, ob der Personenkreis erhöht wird und zudem bevorzugt auch welche weiteren Personen oder weiteren Dienstleister Zugang erhalten. D.h. dass durch eine bestimmte Eingabe zum Beispiel ein zweiter Dienstleister 18, der seine Dienstleistungen in dem fremden Land FL anbietet, Zugang erhält.

Dazu werden die Anpassungs-Daten beispielsweise vom lokalen Rechner 8 oder lokalen Server beim ersten Dienstleister 6 über ein Kommunikations-Netztwerk 20 in die Cloud-Architektur 10 kopiert oder übertragen. Die Übertragung wird dabei vom ersten Dienstleister 6 initiiert, in diesem Fall erhält der erste Dienstleister 6 infolge der bestimmten Eingabe des Nutzers 2 automatisch einen Änderungsauftrag zum Beispiel per SMS oder per E-Mail, oder erfolgt vollständig automatisch infolge der bestimmten Eingabe des Nutzers 2. Liegen die Anpassungs-Daten bereits in der Cloud-Architektur 10 vor, beispielsweise in einem passwortgeschützten Datensatz oder in einer passwortgeschützten Ebene der Cloud-Architektur 10, so werden die Anpassungs-Daten zum Beispiel in eine weitere Ebene der Cloud-Architektur 10 verschoben oder kopiert, zu der der zweite Dienstleister 18 Zugang hat, oder der zweite Dienstleister 18 erhält Zugriffsdaten, die den Zugang ermöglichen, also insbesondere ein Passwort. Auch im zweiten Fall erfolgt die Änderung entweder unter Mithilfe des ersten Dienstleisters 6, in diesem Fall erhält der erste Dienstleister 6 infolge der bestimmten Eingabe des Nutzers 2 wiederum automatisch einen Änderungsauftrag zum Beispiel per SMS oder per E-Mail, oder vollständig automatisch infolge der bestimmten Eingabe des Nutzers 2.

Je nach Anwendungsfall wird der Nutzer 2 jedes Mal benachrichtigt, sobald eine Änderung der Zugriffsbeschränkung durchgeführt wurde. Die Benachrichtigung erfolgt dabei beispielsweise per App-Nachricht, per SMS oder per E-Mail und bevorzugt automatisch. Sie dient als eine Bestätigung für den Nutzer 2.

Wie zuvor dargelegt, ist es bevorzugt vorgesehen, dass der Nutzer 2 auch entscheidet, welche weiteren Personen oder weiteren Dienstleister durch die Änderung der Zugriffsbeschränkung Zugang zu den Anpassungs-Daten erhalten. Dazu wählt der Nutzer 2 beispielsweise einen oder mehrere Dienstleister aus einer Auswahl an geeigneten Dienstleistern aus. Eine entsprechende Auswahl wird dabei zum Beispiel basierend auf Vorgaben des Nutzers 2 automatisch aus einer Datenbank herausgefiltert und dem Nutzer 2 beispielsweise am Display 16 angezeigt. Alternativ gibt die Auswahl Dienstleister wieder, die auf eine Anfrage des Nutzers 2 hin, zum Beispiel eine Anfrage in einem Portal, ihre Dienstleistungen anbieten, die also insbesondere eine Anfrage des Nutzers 2 beantwortet haben.

Ist nun eine Änderung der Zugriffsbeschränkung erfolgt, durch die exemplarisch der zweite Dienstleister 18 Zugang zu den Anpassungs-Daten erhalten hat, so folgt zweckdienlicherweise nachfolgend eine Anpassungs-Sitzung bei dem zweiten Dienstleister 18 in dem fremden Land FL oder zumindest eine Anpassungs-Sitzung durch den zweiten Dienstleiter 18. Im zweiten Fall stellt der Nutzer 2 oder der zweite Dienstleister 18 für die Anpassungs-Sitzung eine Kommunikationsverbindung zwischen dem Hörgerät 4 und/oder der mobilen Datenverarbeitungseinheit 12 und einem lokalen Rechner 22 beim zweiten Dienstleister 18 her. Dabei nutzt dann der zweite Dienstleister 18 die Anpassungs-Daten.

Von Vorteil ist es außerdem, wenn im Zuge des Verfahrens auch eine Rückkehr in das Heimatland HL des Nutzers 2 automatisch erkannt wird und wenn eine Anfrage an den Nutzer 2 ausgegeben wird, ob die Zugriffsbeschränkung zurückgesetzt oder erneut geändert werden soll, wenn die Rückkehr in das Heimatland HL automatisch erkannt wird. Stimmt der Nutzer 2 dann einer Zurücksetzung bzw. erneuten Änderung der Zugriffsbeschränkungen zu, so wird die Zugriffsbeschränkung erneut geändert bzw. wieder zurückgesetzt, beispielsweise indem den zuvor ausgegebenen Zugriffsdaten die Gültigkeit entzogen wird oder indem die Anpassungs-Daten, die gegebenenfalls im Zuge der Anpassungs-Sitzung durch den zweiten Dienstleister 16 geändert oder erweitert wurden, zurück in den lokalen Rechner 8 des ersten Dienstleisters 6 verschoben werden und/oder in der Cloud-Architektur 10 gelöscht werden. Die automatische Erkennung erfolgt dabei analog zu der Erkennung des Aufenthalts im fremden Land FL, also beispielsweise durch eine Verbindung der mobilen Datenverarbeitungseinheit mit einem Mobilfunknetz im Heimatland HL.

### Bezugszeichenliste

- 2: Nutzer
- 4: Hörgerät / Hörgeräte-System
- 4a: Hörgerät für linkes Ohr
- 4b: Hörgerät für rechtes Ohr
- 6: erster Dienstleister (im Heimatland)
- 8: lokaler Rechner (beim ersten Dienstleister)
- 10: Cloud-Architektur
- 12: Smartphone
- 14: Kommunikations-Netzwerk (im fremden Land)
- 16: Display (des Smartphones)
- 18: zweiter Dienstleister (im fremden Land)
- 20: Kommunikations-Netzwerk (im Heimatland)
- 22: lokaler Rechner (beim zweiten Dienstleister)

- HL: Heimatland
- FL: fremdes Land

## Patentansprüche

1. Verfahren zur Unterstützung eines Nutzers (2) eines Hörgerätes (4),
wobei
- das Hörgerät (4) in einer ersten Anpassungs-Sitzung, welche insbesondere im Heimatland (HL) des Nutzers (2) abgehalten wird, individuell an den Nutzer (2) angepasst wird,
- während der ersten Anpassungs-Sitzung Anpassungs-Daten generiert werden,
- die Anpassungs-Daten dem Nutzer (2) oder dem Hörgerät (4) zugeordnet werden und derart abgespeichert werden, dass der Zugriff auf die Anpassungs-Daten durch eine Zugriffsbeschränkung beschränkt ist,
- ein Aufenthalt in einem fremden Land (FL) automatisch erkannt wird und
- eine Anfrage an den Nutzer (2) ausgegeben wird, ob die Zugriffsbeschränkung geändert werden soll, wenn ein Aufenthalt in einem fremden Land (FL) automatisch erkannt wird.

2. Verfahren nach Anspruch 1,
wobei eine mobile Datenverarbeitungseinheit (12), insbesondere ein Smartphone (12), den Aufenthalt in dem fremden Land (FL) automatisch erkennt.

3. Verfahren nach Anspruch 2,
wobei die mobile Datenverarbeitungseinheit (12) den Aufenthalt in dem fremden Land (FL) mit Hilfe von GPS-Daten automatisch erkennt.

4. Verfahren nach Anspruch 2 oder 3,
wobei die mobile Datenverarbeitungseinheit (12) den Aufenthalt in dem fremden Land (FL) mit Hilfe eines Kommunikations-Netzwerks (14), insbesondere eines Mobilfunknetzes oder eines WLAN, automatisch erkennt.

5. Verfahren nach einem der Ansprüche 2 bis 4,
wobei die mobile Datenverarbeitungseinheit (12) den Aufenthalt in dem fremden Land (FL) mit Hilfe einer SIM-Karte automatisch erkennt.

6. Verfahren nach einem der Ansprüche 2 bis 5,
wobei die mobile Datenverarbeitungseinheit (12) die Anfrage, ob die Zugriffsbeschränkung geändert werden soll, an den Nutzer (2) ausgibt, insbesondere über ein Display (16).

7. Verfahren nach einem der Ansprüche 1 bis 6,
wobei die Anfrage an den Nutzer (2), ob die Zugriffsbeschränkung geändert werden soll, nur dann ausgegeben wird, wenn eine zweite Anpassungs-Sitzung als anstehend erkannt wird.

8. Verfahren nach Anspruch 7,
wobei eine zweite Anpassungs-Sitzung als anstehend erkannt wird, wenn eine Fehlermeldung im Hörgerät (4) vorliegt und/oder wenn eine Fehlermeldung vom Hörgerät (4) an die mobile Datenverarbeitungseinheit (12) übermittelt wird.

9. Verfahren nach einem der Ansprüche 1 bis 8,
wobei im Falle einer Zustimmung des Nutzers (2) zur Änderung der Zugriffsbeschränkung die Zugriffsbeschränkung geändert wird, indem Zugriffdaten generiert werden und an eine dritte Partei (18) übermittelt werden.

10. Verfahren nach Anspruch 9,
wobei es sich bei der dritten Partei (18) um einen Dienstleister (18) handelt, der in dem fremden Land (FL) tätig ist.

11. Verfahren nach Anspruch 9,
wobei es sich bei dem Hörgerät (4) um ein spezielles Hörgeräte-Modell (A) handelt und wobei es sich bei der dritten Partei (18) um einen Dienstleister (18) handelt, der in dem fremden Land (FL) tätig ist und der Dienstleistungen zu diesem speziellen Hörgeräte-Modell (A) anbietet.

12. Verfahren nach einem der Ansprüche 1 bis 11,
wobei eine Rückkehr in das Heimatland (HL) des Nutzers (2) automatisch erkannt wird und wobei eine Anfrage an den Nutzer (2) ausgegeben wird, ob die Zugriffsbeschränkung zurückgesetzt werden soll, wenn die Rückkehr in das Heimatland (HL) automatisch erkannt wird.

13. Verfahren nach Anspruch 9 und Anspruch 12,
wobei im Falle einer Zustimmung des Nutzers (2) zum Zurücksetzen der Zugriffsbeschränkung die Zugriffsbeschränkung zurückgesetzt wird, indem den Zugriffdaten die Gültigkeit entzogen wird.

14. Hörgerät (4) eingerichtet zur Ausführung zumindest eines Verfahrensschrittes eines Verfahrens nach einem der vorherigen Ansprüche in zumindest einem Betriebsmodus.

15. Computerprogrammprodukt enthaltend ein auf einer mobilen Datenverarbeitungseinheit (12) ausführbares Programm, welches nach einem Start zumindest einen Verfahrensschritt eines Verfahrens nach einem der vorherigen Ansprüche automatisch ausführt.
